# EUROPÄISCHE PATENTSCHRIFT

(11) **EP 0 599 863 B1**
(45) Veröffentlichungstag und Bekanntmachung des Hinweises auf die Patenterteilung: **18.09.1996**
(21) Anmeldenummer: 92915438.3
(22) Anmeldetag: 24.07.1992
(51) Int. Cl.: G01N 29/14, G01N 29/26

(54) **VERFAHREN UND VORRICHTUNG ZUM ERKENNEN UND ORTEN VON VERÄNDERUNGEN AN EINEM BAUTEIL EINER TURBINE**
METHOD AND DEVICE FOR THE DETECTION AND LOCATION OF CHANGES IN A TURBINE COMPONENT
PROCEDE ET DISPOSITIF POUR LA DETECTION ET LA LOCALISATION DE CHANGEMENTS SUR UN ELEMENT DE TURBINE

(30) Priorität: 19.08.1991 DE 4127395
(43) Veröffentlichungstag der Anmeldung: 08.06.1994
(73) Patentinhaber: SIEMENS AKTIENGESELLSCHAFT, 80333 München (DE)
(72) Erfinder: ZÖRNER, Walter, D-8523 Baiersdorf (DE)
(86) Internationale Anmeldenummer: DE9200607
(87) Internationale Veröffentlichungsnummer: WO9304365

(56) Entgegenhaltungen:
- EP-A- 0 209 862
- US-A- 4 007 630
- US-A- 4 977 516
- US-A- 5 070 722
- VGB KRAFTSWERKSTECHNIK Bd. 69, Nr. 9, September 1989, Seiten 896 - 907 VON. D. STEGEMANN ET AL. 'K rperschall und Schwingungsanalysen zur Schadenserkennung in Turbomachinen.'

## Beschreibung

Die Erfindung betrifft ein Verfahren zum Erkennen und Orten von Veränderungen an einem Bauteil einer Turbine, insbesondere an einer Turbinenschaufel. Sie richtet sich weiter auf eine Einrichtung zur Durchführung des Verfahrens.

Beim Betrieb einer Turbine, z.B. einer Dampfturbine, wird infolge einer Reaktion der einzelnen Bauteile, insbesondere der Turbinenschaufel, auf verschiedene Beanspruchungen ein meßbares Klang- oder Schallspektrum (Körperschall) emittiert. Derartige Beanspruchungen sind z.B. bei der Entspannung eines Arbeitsmittels auftretende Kräfte und Temperaturdifferenzen. Durch die Energieumsetzung in der Turbine entstehen außerdem Druckschwankungen, die ebenfalls zu einer charakteristischen Schallemission der Bauteile führen und sich im sogenannten Schaufeldrehklang äußern. Auch Unregelmäßigkeiten beim Betrieb der Turbine, wie z.B. ein Anstreifen der Laufschaufeln der Turbine am Gehäuse oder an benachbarten Leitschaufeln, oder eine lose Turbinenschaufel bewirken eine störungsspezifische schall-emission mit einem weiten Schallspektrum. Die Signalanteile in diesem Schallspektrum sind in bezug auf die Frequenz und die Intensität der abgestrahlten Schallenergie unterschiedlich und für eine Turbine im Normalbetrieb, d.h. im fehlerfreien Betrieb, charakteristisch, wobei das Schallspektrum vom Infraschall bis zum Ultraschall reicht.

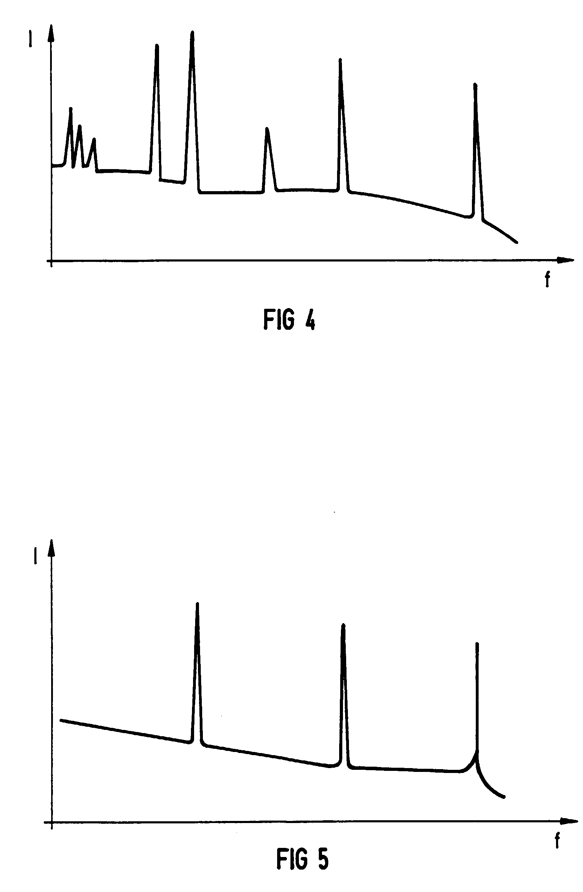

Aus der Druckschrift VGB Kraftwerkstechnik, Heft 9, September 1989, Seite 899 bis 907 ist ein Verfahren zur Erfassung und Analyse derartiger Schallemissionen bekannt. Beispiele für ein typisches, am Turbinengehäuse gemessenes Schallspektrum und für ein zugehöriges Bezugsspektrum sind in den Figuren 4 bzw. 5 vereinfacht dargestellt. Im Normalzustand der Turbine treten beim sogenannten Körperschall charakteristische Signale, z.B. bestimmte harmonische Oberschwingungen oder Frequenzen f des Laufschaufeldrehklangs mit unterschiedlichen Intensitäten I deutlich aus dem in Figur 5 dargestellten Bezugsspektrum hervor. Bei dem in Figur 4 dargestellten Schallspektrum sind zusätzlich weitere Signale bei verschiedenen Frequenzen f mit unterschiedlichen Intensitäten I vorhanden. Diese weiteren Signale sind für bestimmte Veränderungen, z.B. für das Fehlen von Turbinenschaufeln, oder für einen Verzahnungsfehler in einem zwischen der Turbine und einem Generator angeordneten Getriebe charakteristisch.

Bei dem bekannten Verfahren werden während des Betriebs der Turbine neben der Messung des Körperschalls oder Schaufeldrehklangs am Turbinengehäuse weitere Meßwerte, z.B. der Druck und die Temperatur im Inneren der Turbine erfaßt und mit während eines fehlerfreien Betriebs der Turbine ermittelten Norm- oder Sollwerten verglichen. Bei einer Sollwertabweichung ist durch Vergleich mit empirisch ermittelten Fehlern oder Störungen eine Charakterisierung einer vorhandenen, groben Veränderung möglich. Ein frühzeitiges Erkennen und eine exakte Lokalisierung einer nur langsam fortschreitenden Veränderung an einem bestimmten Bauteil der Turbine sind mit diesem Verfahren jedoch nicht möglich. Daher wurde bisher ein Schaden häufig erst dann erkannt, wenn bereits ein Folgeschaden aufgetreten und daher ein sofortiges Abstellen der Turbine erforderlich war. Ein derartiges, außerplanmäßiges Abschalten der Turbine und eine anschließende aufwendige Fehlersuche bei geöffnetem Turbinengehäuse führt allerdings zu äußerst unerwünschten Ausfallzeiten.

Der Erfindung liegt daher die Aufgabe zugrunde, ein Verfahren anzugeben, mit dem eine zuverlässige und frühzeitige Fehlererkennung möglich ist. Dies soll hinsichtlich eines möglichst geringen technischen Aufwands mit einer besonders geeigneten Einrichtung erreicht werden.

Bezüglich des Verfahrens wird diese Aufgabe erfindungsgemäß dadurch gelöst, daß bei einer Abweichung mindestens eines während des Betriebs der Turbine ermittelten Meßwertes vom Normwert ein von dem Bauteil erzeugtes Schallspektrum mit einer Sonde im Inneren der Turbine erfaßt und mit einem Bezugsspektrum verglichen wird. Eine Meßwertabweichung, z.B. des Drucks, der Temperatur oder des betriebsmäßig auftretenden Schallspektrums von einem entsprechenden Normwert ermöglicht einerseits zunächst die Erfassung oder das Erkennen einer groben Veränderung und andererseits eine Beschränkung der Anzahl der möglichen, fehlerhaften Bauteile. Eine Erfassung des Schallspektrums im Inneren der Turbine, d.h. eine Messung der Schallemission direkt am Bauteil, ermöglicht darüber hinaus eine detaillierte Fehlererkennung.

Zur Erhöhung der Signalintensitäten des im Inneren der Turbine erfaßten Schallspektrums, werden die Bauteile bei bestimmten Betriebszuständen der Turbine, z.B. in Form einer sogenannten Klangprobe der Turbinenschaufeln mit Hilfe eines Klang- oder Schallgebers, von außen zur Schallemission angeregt. Durch den anschließenden Vergleich des im Inneren der Turbine direkt erfaßten oder durch die Anregung erzeugten Schallspektrums mit einem Bezugsspektrum vom Ursprungszustand der Turbine wird eine exakte Ortung des betroffenen Bauteils erreicht. Außerdem wird der Grad der Veränderung oder des Schadens, insbesondere auch eine Ausbreitung eines bereits vorhandenen Risses, frühzeitig erkannt, so daß zeitlich vor einem vollständigen Ausfall des betroffenen Bauteils eine Behebung des Schadens, z.B. in Zeiten geringen Energiebedarfs, möglich ist.

Gemäß einer vorteilhaften Weiterbildung des erfindungsgemäßen Verfahrens wird die Oberfläche des Bauteils stroboskopisch belichtet und das dabei erzeugte Bild aufgenommen, wobei die stroboskopische Belichtung zweckmäßigerweise mit einer geeigneten Drehzahl der Turbine synchronisiert ist. Das dabei aufgenommene Bild wird mit einem Bezugsbild desselben Bauteils verglichen. Diese Maßnahme ist besonders für den Fall geeignet, daß sich aufgrund einer vorherigen Anregung des Bauteils eine Veränderung in einem visuell zugänglichen Bereich des Bauteils ergibt.

Ergibt sich, z.B. aufgrund einer vorherigen Anregung des Bauteils, daß eine Veränderung an einem visuell unzugänglichen Bereich des Bauteils vorliegt, z.B. ein Riß an einer Turbinenschaufel oder an einem Schaufelrad, so wird in zweckmäßiger Weiterbildung des erfindungsgemäßen Verfahrens ein beweglicher Ultraschallgeber an diesen Bereich des Bauteils herangeführt und dort mindestens an einem Teil des Umfangs des Bauteils entlanggeführt.

Bezüglich der Einrichtung, die zur Aufnahme von Betriebsparametern der Turbine eine Anzahl von mit einer Vorrichtung zur Meßwertaufbereitung verbundenen Sensoren aufweist, wird die Aufgabe erfindungsgemäß gelöst durch eine von außen in das Innere der Turbine einführbare Sonde zur Schallerfassung, die mit der Vorrichtung zur Meßwertaufbereitung verbunden ist.

Die Sonde ist zweckmäßigerweise mit einer Verstelleinrichtung verbunden, mit der jene vertikal verschoben und gedreht werden kann.

Zur Klanganregung der Turbinenschaufeln ist in vorteilhafter Ausgestaltung der erfindungsgemäßen Einrichtung am freien Ende der Sonde ein flexibler Kopf vorgesehen, der mit den sich drehenden Schaufeln in Berührung gebracht wird.

Zur näheren Erläuterung der Erfindung werden anhand einer Zeichnung Ausführungsbeispiele beschrieben; darin zeigen:
Figur 1 in schematischer Komponentendarstellung eine Einrichtung zur Durchführung des erfindungsgemäßen Verfahrens, und
Figur 2 einen Ausschnitt aus Figur 1 in größerem Maßstab mit einer in die Turbine eingeführten Sonde,
Figur 3 einen Ausschnitt gemäß Figur 2 mit einem in die Turbine eingeführten Ultraschallgeber, und
Figuren 4 und 5 in vereinfachten Darstellungen am Tubinengehäuse oder im Inneren der Turbine gemessene Schallspektren.

Einander entsprechende Teile sind in allen Figuren mit den gleichen Bezugszeichen versehen.

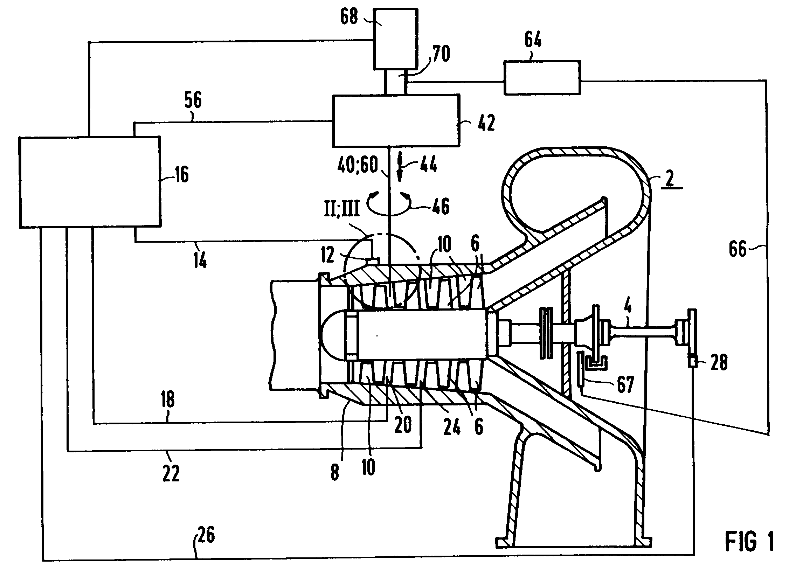

Die in Figur 1 dargestellte Turbine 2 umfaßt auf einer Welle 4 befestigte Laufschaufeln 6 und mit einem Turbinengehäuse 8 verbundene Leitschaufeln 10.

Am Turbinengehäuse 8 ist ein Sensor 12 zur Aufnahme des von der Turbine 2 während des Betriebs emittierten Schalls - dem sogenannten Körperschall oder Schaufeldrehklang - befestigt. Der Sensor 12 ist über eine Leitung 14 mit einer Vorrichtung 16 zur Meßwertaufbereitung verbunden.

Der Vorrichtung 16 zur Meßwertaufbereitung wird außerdem über eine Leitung 18 ein von einem Temperatursensor 20 erfaßter Meßwert und über eine Leitung 22 ein von einem Drucksensor 24 erfaßter Meßwert sowie über eine Leitung 26 ein von einem Dehnungssensor 28 erfaßter Meßwert zugeführt. Mit dem Dehnungssensor 28 wird eine Axialdehnung der Welle 4 erfaßt, die bei einer gleichzeitig vom Sensor 12 ermittelten Veränderung des Schaufeldrehklangs auf einen Anstreifvorgang, d.h. auf eine Berührung einer Laufschaufel 6 mit einer Leitschaufel 10 oder mit dem Gehäuse 8, hinweist. Durch eine derartige Kohärenz zweier Normwertabweichungen wird eine hohe Meßgenauigkeit erreicht.

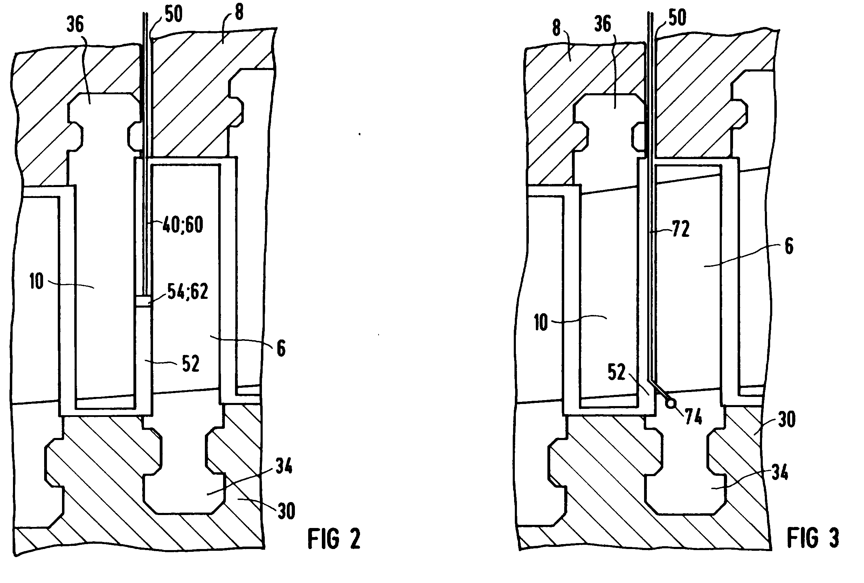

Wird aufgrund einer Abweichung einer der mit den Sensoren 20, 24, 28 ermittelten Meßwerte eine Veränderung an einem Bauteil der Turbine 2, insbesondere an einer Laufschaufelreihe, an einer Leitschaufelreihe oder an einem in den Figuren 2 und 3 erkennbaren Schaufelrad 30 erkannt, so ist zunächst eine Aussage über die Art einer Störung sowie eine Beschränkung der Anzahl der möglicherweise betroffenen Bauteile 6, 10, 30 möglich. So kann z.B. anhand eines Vergleichs eines mit dem Sensor 12 aufgenommenen Schallspektrums gemäß Figur 5 mit dem in der Vorrichtung 16 zur Meßwertaufbereitung abgespeicherten Bezugsspektrum gemäß Figur 4 ein Abriß einer Laufschaufel 6 oder einer Leitschaufel 10 festgestellt werden. Ein derartiger Abriß spiegelt sich auch in einer Druck- oder Temperaturänderung wieder. Wird dagegen eine nur geringfügige Veränderung erkannt, die lediglich einen Verdacht auf ein bestimmtes Bauteil ermöglicht, wie z.B. ein Vedacht auf einen Riß an einer Laufschaufel 6 oder einer Leitschaufel 10, oder an einem in den Figuren 2 und 3 erkennbaren Schaufelfuß 34 bzw. 36, so wird - wie im folgenden näher beschrieben - zunächst eine Schallaufnahme im Inneren der Tubine 2 und, falls erforderlich, eine Klangprobe durch Anregung der Laufschaufeln 6 zur Schallemission von außen durchgeführt. Ein derartiger, sich häufig langsam ausbreitender Riß oder Anriß kann z.B. durch Spannungsrißkorrosion oder bei einem Anstreifvorgang entstehen. Dabei wird zunächst im vom Sensor 12 aufgenommenen Schallspektrum lediglich der Anstreifvorgang selbst, nicht aber ein geringfügiger Schaden, mit einem möglicherweise zu einem späteren Zeitpunkt auftretenden erheblichen Folgeschaden erkannt.

Zum Erkennen derartiger, kleinster Veränderungen an einer Schaufel 6 oder 10, an einem Schaufelfuß 34 bzw. 36, oder am Schaufelrad 30, an dem die Laufschaufeln 6 in einer Schaufelreihe befestigt sind, wird während des Betriebs der Turbine 2 bei bestimmten Drehzahlen eine Sonde 40 zur Schallaufnahme von außen durch das Gehäuse 8 in die Turbine 2 eingeführt. Dazu ist die Sonde 40 mit einer Verstelleinrichtung 42 verbunden, mit der - wie durch die Pfeile 44 und 46 angedeutet - eine vertikale Verschiebung bzw. eine Drehbewegung der Sonde 40 durchführbar ist.

In Figur 2 ist eine Sonde 40 dargestellt, die durch eine Öffnung 50 im Gehäuse 8 in einen zwischen den Laufschaufeln 6 und den Leitschaufeln 10 einer Stufe der Turbine 2 vorhandenen Spalt 52 geführt ist. Die Sonde 40 kann in entsprechender, nicht näher dargestellter Weise auch an die Schaufeln 6, 10 benachbarter Turbinenstufen geführt werden, wobei dort ebenfalls entsprechende Gehäuseöffnungen vorgesehen sind.

Am freien Ende der Sonde 40 ist ein flexibler Kopf 54 befestigt, der zur Anregung mit den sich drehenden Laufschaufeln 6 der Turbine 2 in Berührung gebracht wird. Dieser Vorgang wird als Klangprobe bezeichnet. Das dabei emittierte Schallspektrum wird von der zur Schallaufnahme geeigneten Sonde 40 aufgenommen und über eine Leitung 56 an die Vorrichtung 16 übertragen. Die Signalanteile des durch die Anregung erzeugten Schallspektrums sind bei ausreichender Intensität auch im betriebsmäßig auftretenden und mit dem Sensor 12 am Gehäuse 8 gemessenen Schallspektrum vorhandenen.

In der Vorrichtung 16 wird das durch die Bauteile 6, 10 direkt oder durch die Klangprobe erzeugte Schallspektrum, z.B. mit Hilfe eines Computers, mit einem gespeicherten Bezugsspektrum vom Ursprungszustand der Turbine 2 verglichen. Dabei entspricht ein im Schallspektrum enthaltenes und im Bezugsspektrum fehlendes Signal einer charakteristischen, z.B. empirisch ermittelten, Veränderung an einem Bauteil, z.B. an einer Laufschaufel 6. Aus dem aufgenommenen Schallspektrum läßt sich aufgrund eines periodisch wiederkehrenden Signals feststellen, welche Laufschaufel 6 eine Veränderung aufweist, wobei ein für jede Laufschaufel 6 charakteristisches Signal ebenfalls periodisch auftritt und somit jede Schaufel 6 anhand des Schallspektrums identifiziert werden kann. In entsprechender Weise ist durch Anbringen des Kopfes 54 oder eines ähnlichen Klanggebers an einer Laufschaufel 6 eine Veränderung an einer Leitschaufel 10 feststellbar, wobei der mit den Laufschaufeln 6 mitdrehende Kopf 54 die Leitschaufeln 10 berührt und zur Schallemission anregt.

Wird bei einer derartigen Klangprobe, d.h. aufgrund einer Anregung der Turbinenschaufeln 6 oder 10 zur Schallemission, eine Veränderung in einem visuell zugänglichen Bereich des Bauteils, z.B. an einer bestimmten Laufschaufel 10 festgestellt, so wird anstelle der Sonde 40 zur Schallaufnahme ein an einem Glasfaserkabel 60 angeordneter Sondenkopf 62 zur Lichtübertragung in den Spalt 52 eingeführt und mittels der Verstelleinrichtung 42 in einem ausgewählten Drehzahlbereich der Turbine 2 an der Turbinenschaufel 6 entlanggeführt. Dabei wird die Oberfläche der Turbinenschaufel 6 mit von einem Lichtgeber oder Stroboskop 64 erzeugten und über das Glasfaserkabel 60 geleiteten Lichtimpulsen belichtet, wobei die Frequenz der Lichtimpulse mit der Drehzahl der Turbine 2 synchronisiert ist. Dazu ist das Stroboskop 64 über eine Leitung 66 mit einem Drehzahlmesser 67 verbunden. Über die Synchronisierung läßt sich jede gewünschte Laufschaufel 6 anwählen und belichten. Die dabei erzeugten Bilder von der Oberfläche der Laufschaufel 6 werden über den Sondenkopf 62 und das Glasfaserkabel 60 auf eine Kamera 68 mit einem Fokus 70 übertragen. Die von der Kamera 68 aufgenommenen Bilder werden zum Vergleich mit gespeicherten Bezugsbildern an die Vorrichtung 16 zur Meßwertaufbereitung übertragen.

Ergibt sich aufgrund einer Anregung der Laufschaufeln 6, daß eine Veränderung an einem visuell unzugänglichen Bereich, insbesondere an einem Schaufelfuß 34 vorliegt, so wird bei Stillstand der Turbine 2 anstelle des Glasfaserkabels 60 mit dem Sondenkopf 62 - wie in Figur 3 dargestellt - ein an einem flexiblen Kabel 72 befestigter Ultraschallgeber 74 durch den Spalt 52 an den Schaufelfuß 34 herangeführt. Dort wird zum Auffinden eines Risses der Ultraschallgeber 74 am Umfang des Schaufelfußes 34 entlanggeführt.

Die im Inneren der Turbine 2 aufgenommenen Schallspektren weisen je nach Art und Umfang der Veränderung unterschiedliche Signale auf. Jene sind den in den Figuren 4 und 5 vereinfacht dargestellten Schallspektren jedoch sehr ähnlich und daher nicht separat dargestellt.

## Patentansprüche

1. Verfahren zum Erkennen und Orten von Veränderungen an einem Bauteil (6, 10, 30) einer Turbine (2), insbesondere an einer Turbinenschaufel (6, 10),
**dadurch gekennzeichnet**,
daß bei einer Abweichung mindestens eines während des Betriebs der Turbine (2) ermittelten Meßwertes vom Normwert ein von dem Bauteil (6, 10) erzeugtes Schallspektrum mit einer Sonde (40) im Inneren der Turbine (2) erfaßt und mit einem Bezugsspektrum verglichen wird.

2. Verfahren nach Anspruch 1,
**dadurch gekennzeichnet**,
daß bei einer Abweichung mindestens eines während des Betriebs der Turbine (2) ermittelten Meßwertes vom Normwert ein durch Anregung von außen von dem Bauteil (6, 10) erzeugtes Schallspektrum mit einem Bezugsspektrum verglichen wird.

3. Verfahren nach Anspruch 1 oder 2,
**dadurch gekennzeichnet**,
- daß nach einer Messung einer Schallemission die Oberfläche des das Schallspektrum erzeugenden Bauteils (6, 10) stroboskopisch belichtet und das dabei erzeugte Bild aufgenommen wird, und
- daß das aufgenommene Bild mit einem Bezugsbild verglichen wird.

4. Verfahren nach einem der Ansprüche 1 oder 2, **dadurch gekennzeichnet**, daß nach einer Messung einer Schallemission ein beweglicher Ultraschallgeber (74) an einen visuell unzugänglichen Bereich (34, 36) des das Schallspektrum erzeugenden Bauteils (6 bzw. 10) herangeführt und dort mindestens an einem Teil des Umfangs des Bauteils (6, 10) entlanggeführt wird.

5. Verfahren nach einem der Ansprüche 1 bis 4,
**dadurch gekennzeichnet** , daß ein betriebsmäßig auftretendes Schallspektrum am Turbinengehäuse (8) als Meßwert aufgenommen und mit einem ebenfalls am Turbinengehäuse (8) aufgenommenen und abgespeicherten Bezugsspektrum verglichen wird.

6. Einrichtung zum Erkennen und Orten von Veränderungen an einem Bauteil (6, 10, 30) einer Turbine (2), z.B. an einer Turbinenschaufel (6, 10), mit einer Anzahl von zur Aufnahme von Betriebsparametern der Turbine (2) vorgesehenen Sensoren (12,20,24,28,67), die mit einer Vorrichtung (16) zur Meßwertaufbereitung verbundenen sind, **dadurch gekennzeichnet**, daß sie zur Durchführung des Verfahrens nach einem der Ansprüche 1 bis 5 dient und dafür eine von außen in das Innere der Turbine (2) einführbare Sonde (40) zur Schallerfassung aufweist, die mit der Vorrichtung (16) verbunden ist.

7. Einrichtung nach Anspruch 6,
**dadurch gekennzeichnet**, daß die Sonde (40) mittels einer Verstelleinrichtung (42) sowohl vertikal verschiebbar als auch drehbar ist.

8. Einrichtung nach Anspruch 6 oder 7,
**dadurch gekennzeichnet**, daß am freien Ende der Sonde (40) ein flexibler Kopf (54) zur Klanganregung der Turbinenschaufeln (6, 10) vorgesehen ist.

## Claims

1. Method for recognising and locating changes at a component (6, 10, 30) of a turbine (2), in particular at a turbine blade (6, 10), characterised in that in the event of at least one measured value, established during the operation of the turbine (2), deviating from the standard value, a sound spectrum produced by the component (6, 10) is detected with a probe (40) in the inside of the turbine (2) and compared with a reference spectrum.

2. Method according to claim 1, characterised in that in the event of at least one measured value, established during the operation of the turbine (2), deviating from the standard value a sound spectrum produced by the component (6, 10) as a result of excitation from the outside is compared with a reference spectrum.

3. Method according to claim 1 or 2, characterised
- in that after a measurement of a sound emission, the surface of the component (6, 10) which produces the sound spectrum is stroboscopically lit and the image which is produced thereby is recorded, and
- in that the image which is recorded is compared with a reference image.

4. Method according to one of the claims 1 or 2, characterised in that after a measurement of a sound emission, a movable ultrasound transmitter (74) is guided to a visually inaccessible region (34, 36) of the component (6 or 10) which produces the sound spectrum, and is there guided along at least one portion of the circumference of the component (6, 10).

5. Method according to one of the claims 1 to 4, characterised in that a sound spectrum which occurs in accordance with the operation is recorded at the turbine housing (8) as a measured value and is compared with a reference spectrum which was likewise recorded at the turbine housing (8) and stored.

6. Device for recognising and locating changes at a component (6, 10, 30) of a turbine (2), for example at a turbine blade (6, 10), having a number of sensors (12, 20, 24, 28, 67) which are provided for recording operational parameters of the turbine (2) and are connected to an apparatus (16) for conditioning measured values, characterised in that said device is used for carrying out the method according to one of the claims 1 to 5 and for this purpose has a probe (40) for sound detection, which probe can be inserted into the inside of the turbine (2) from the outside and is connected to the apparatus (16).

7. Device according to claim 6, characterised in that the probe (40) can be shifted vertically and can also be rotated by means of an adjusting device (42).

8. Device according to claim 6 or 7, characterised in that provided on the free end of the probe (40) is a flexible head (54) for sound excitation of the turbine blades (6, 10).

## Revendications

1. Procédé de détection et de localisation de modifications d'une partie constitutive (6, 10, 30) d'une turbine (2), notamment d'une pale (6, 10) de la turbine,
caractérisé en ce que
on détecte, en cas d'écart d'au moins une valeur de mesure déterminée pendant le fonctionnement de la turbine (2) par rapport à la valeur normale, un spectre sonore produit par la partie constitutive (6, 10), par une sonde (40) à l'intérieur de la turbine (2) et on le compare à un spectre de référence.

2. Procédé suivant la revendication 1,
caractérisé en ce que
on compare, en cas d'écart d'un moins une valeur de mesure déterminée pendant le fonctionnement de la turbine (2) par rapport à la valeur normale, un spectre sonore produit par la partie constitutive (6,10) par excitation, en provenance de l'extérieur, à un spectre de référence.

3. Procédé suivant la revendication 1 ou 2,
caractérisé en ce que
- on éclaire de manière stroboscopique, après une mesure d'une émission sonore, la surface de la partie constitutive (6, 10) produisant le spectre sonore et on reçoit l'image ainsi produite, et
- on compare l'image reçue à une image de référence.

4. Procédé suivant l'une des revendications 1 et 2,
caractérisé en ce qu'après avoir mesuré une émission sonore, on avance un émetteur (74) mobile d'ultrasons dans une zone (34, 36), inaccessible à la vue, de la partie constitutive (6 et 10) produisant le spectre sonore et on l'y guide le long d'au moins une partie du contour de la partie constitutive (6, 10).

5. Procédé sur l'une des revendications 1 à 4,
caractérisé en ce que l'on reçoit comme valeur de mesure un spectre sonore apparaissant en fonctionnement dans la carcasse (8) de turbine et on le compare à un spectre de référence reçu également de la carcasse (8) de turbine et mémorisé.

6. Dispositif de détection et de localisation de modifications d'une partie constitutive (6, 10, 30) d'une turbine (2), par exemple d'une pale (6, 10) de turbine, comportant un certain nombre de capteurs (12, 20, 24, 28, 67), qui sont prévus pour la réception de paramètres de fonctionnement de la turbine (2) et qui sont reliés à un dispositif (16) destiné à la fourniture de valeurs de mesure, caractérisé en ce que le dispositif sert à la mise en oeuvre du procédé suivant l'une des revendications 1 à 5 et comporte à cet effet une sonde (40), qui peut être introduite de l'extérieur à l'intérieur de la turbine (2), qui est destinée à la détection du son et qui est reliée au dispositif (16).

7. Dispositif suivant la revendication 6,
caractérisé en ce que la sonde (40) peut à la fois coulisser verticalement et tourner au moyen d'un dispositif (42) de déplacement.

8. Dispositif suivant la revendication 6 ou 7,
caractérisé en ce qu'il est prévu à l'extrémité libre de la sonde (40) une tête (54) flexible destinée à l'excitation sonore des pales (6, 10) de turbine.
